# EUROPEAN PATENT SPECIFICATION

(11) **EP 0 546 070 B1**
(45) Date of publication and mention of the grant of the patent: **30.11.1994**
(21) Application number: 91916415.2
(22) Date of filing: 03.09.1991
(51) Int. Cl.: F16C 33/20

(54) **A PLASTICS BASED BEARING MATERIAL AND A BEARING HAVING A LINING OF THE MATERIAL**
LAGERMATERIAL AUF KUNSTSTOFFBASIS UND LAGER MIT EINER SCHICHT AUS DEM MATERIAL
MATIERE A BASE DE PLASTIQUE POUR COUSSINETS, ET COUSSINET PRESENTANT UN REVETEMENT DE CETTE MATIERE

(30) Priority: 04.09.1990 GB 9019251
(43) Date of publication of application: 16.06.1993
(73) Proprietor: THE GLACIER METAL COMPANY LIMITED, Northwood Hills Middlesex HA6 1LN (GB)
(72) Inventor: DAVIES, Glyndwr, John 2 Cox Crescent Dunchurch, Warwickshire CV22 6QX (GB)
(74) Representative: Crux, John Anthony
(86) International application number: GB9101490
(87) International publication number: WO9204551

(56) References cited:
- EP-A- 0 163 937
- EP-A- 0 340 839
- EP-A- 0 430 324
- DE-A- 1 400 284
- DE-B- 2 166 809

## Description

The present invention relates to a plastics based bearing material and a bearing having a lining of the material.

In some bearing applications, such as in food processing machinery for example, it is frequently necessary to employ bearings having self lubricating properties. It is also necessary, due to ever more strict legislation, that the bearing materials themselves are unleaded. A well known bearing material comprising polytetrafluoroethylene (PTFE) and lead has excellent self lubricating properties and possesses a low wear rate and long operating life. (see e.g. EP-A-0 163 937)

However, the presence of lead has rendered this material unsuitable for use in applications such as those specified above.

One material which is currently used comprises a molybdenum disulphide filled PTFE matrix which, whilst conforming to the legislation, possesses a relatively short life compared to the lead containing PTFE material. It is believed that the long operating life and low wear rate of the lead containing material is due to the effect of lead in promoting a tenacious transfer film to the co-operating shaft. It is further believed that the molybdenum disulphide filled material does not possess this adhesive transfer-film forming ability.

We have now found a lead-free material which does have a longer life than known molybdenum disulphide containing materials.

According to a first aspect of the present invention, a lead-free bearing material comprises a PTFE matrix having incorporated therein 1 to 10 vol.% of graphite; 5 to 20 vol.% of copper-based alloy powder and 4 to 25 vol.% of zinc powder.

The copper-based alloy powder is preferably bronze of, for example, 11 wt.% tin-balance copper, phosphor bronze or brass.

Preferably, the copper-based alloy powder should all pass through a 300 B.S mesh sieve, which corresponds to a maximum particle size of about 50 micro metres.

Similarly, it is also preferred that the zinc powder also passes through a 300 B.S mesh sieve.

In a preferred composition range the material has from 2 to 7 vol.% of graphite; 10 to 20 vol% of copper-based alloy and 5 to 20 vol.% of zinc.

In a still more preferred composition, the material has from 3 to 7 vol% of graphite; 13 to 17 vol.% of copper-based alloy powder and 8 to 12 vol.% of zinc.

It is believed that the good performance of this material is due to the zinc helping to promote an adherent transfer film to the co-operating shaft.

According to a second aspect of the present invention, there is provided a bearing having a lead-free lining thereon comprising a PTFE matrix and having incorporated therein 1 to 10 vol.% of graphite, 5 to 20 vol.% of a copper-based alloy and 4 to 25 vol.% of zinc.

In one embodiment of a bearing according to the present invention the bearing lining material may be provided as a layer on a strong metal backing such as steel or bronze, for example.

The metal backing may also be provided with a further adherent layer of a powdered material which acts as a mechanical bonding medium to retain the bearing lining material . The powdered material may comprise a layer of generally rounded bronze particles sintered to the metal backing surface, for example.

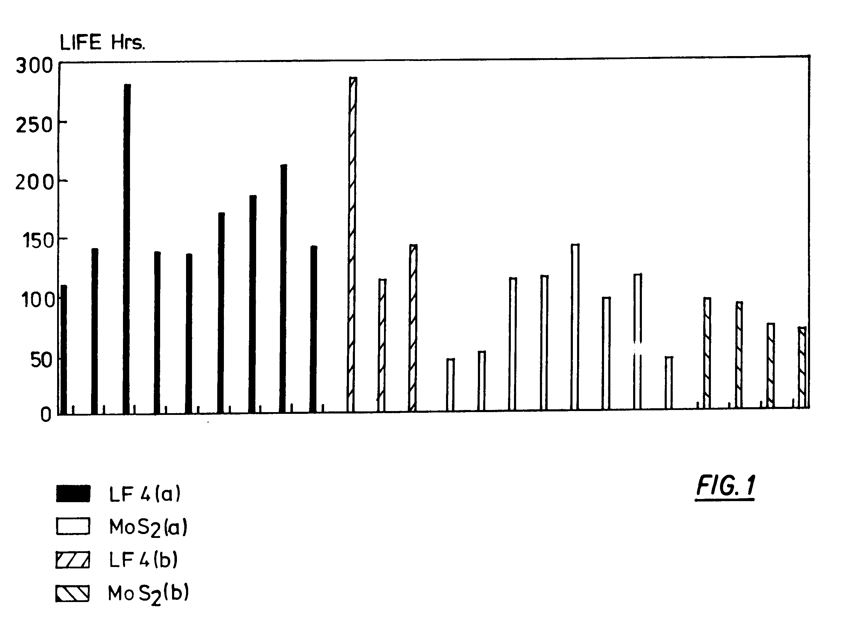

In order that the present invention may be more fully understood examples will now be described by way of illustration only with reference to the accompanying drawing (Figure 1) which is a histogram depicting the life in hours of a bearing having a lining of a bearing material according to the present invention compared with a known material tested under the same conditions.

Bearings having a lining of a bearing material according to the present invention were manufactured by the method set out in the following description.

An aqueous dispersion of PTFE, Fluon GSD5 ( a trade mark of the ICI company) is mixed with Foliac X6236 (trade mark of the Rocol company) graphite, 11 wt% tin-bronze powder of -300 B.S mesh sieve size and zinc powder from the BDH company. After mixing the material is allowed to settle and excess water drained away followed by partial drying of the resulting paste. The paste is impregnated into a layer of bronze particles which are sintered onto a steel strip. Impregnation is effected by a spreading die which distributes the paste onto the strip surface, followed by impregnation by a roller into the surface to leave a surface layer of the lining material about 30 micrometres thick. The impregnated strip is heated to drive off residual moisture and to cure the PTFE matrix at about 380°C.

Bearings having a lining comprising 5 vol.% graphite, 15 vol.% bronze and 10 vol.% zinc in a PTFE matrix were manufactured from the strip produced as described above. Bearings were also produced from a known molybdenum disulphide filled PTFE material also having a steel backing.

The bearings produced were subjected to dry running endurance tests. Each bearing was cylindrical in form with an internal bore of 20 mm and an axial length of 15 mm. The bearings were subjected to a load of 53.4 kgs (specific load 1.78 N/mm²) and a shaft rotational speed of 750 rev/min. which produced a PV (pressure x velocity) factor of 1.4. The tests were terminated when a total wear of 0.25 mm had taken place in the lining.

The bearings and material according to the present invention were tested on two different testing machines under nominally the same test schedule; these are shown in the histogram as "LF4(a)" and "LF4 (b)". The known molybdenum disulphide filled material tested on the same test machines under the same schedules is designated as "MoS₂(a)" and "MoS₂(b)".

It may be seen from the histogram that, although there is a scatter of results in the wear life, the performance of the material according to the present invention is significantly better than that of the known material.

## Claims

1. A lead-free bearing material which comprises a PTFE matrix having incorporated therein 1 to 10 vol% of graphite; 5 to 20 vol% of copper-based alloy powder and 4 to 25 vol.% of zinc powder.

2. A bearing material according to claim 1 characterised in that it comprises from 2 to 7 vol% of graphite; 10 to 20 vol.% of copper-based alloy and 5 to 20 vol.% of zinc.

3. A bearing material according to either claim 1 or claim 2, further characterised in that it comprises from 3 to 7 vol.% of graphite; 13 to 17 vol.% of copper-based alloy and 8 to 12 vol. % of zinc.

4. A bearing material according to any one preceding claim characterised in that the zinc is a powder which passes through 300 B.S mesh sieve (about 50 µm).

5. A bearing material according to any one preceding claim characterised in that the copper-based alloy is a powder which passes through a 300 B.S mesh sieve (about 50 µm).

6. A bearing material according to any one preceding claim characterised in that the copper-based alloy is selected from the group of alloys comprising brass, tin-bronze and phosphor bronze.

7. A bearing comprising a strong backing with the presence thereon of a lead-free lining comprising a PTFE matrix having incorporated therein 1 to 10 vol.% of graphite; 5 to 20 vol.% of copper-based alloy powder and 4 to 25 vol.% of zinc powder.

## Patentansprüche

1. Bleifreies Lagermaterial, das eine PTFE-Matrix aufweist, die darin 1 bis 10 Vol.-% Graphit, 5 bis 20 Vol-% eines Pulvers einer Legierung auf Kupferbasis und 4 bis 25 Vol.-% Zinkpulver einbezogen enthält.

2. Lagermaterial nach Anspruch 1, dadurch gekennzeichnet, daß es 2 bis 7 Vol.-% Graphit, 10 bis 20 Vol.-% Legierung auf Kupferbasis und 5 bis 20 Vol.-% Zink enthält.

3. Lagermaterial nach Anspruch 1 oder 2, dadurch gekennzeichnet, daß es 3 bis 7 Vol.-% Graphit, 13 bis 17 Vol.-% Legierung auf Kupferbasis und 8 bis 12 Vol.-% Zink enthält.

4. Lagermaterial nach irgendeinem der vorhergehenden Ansprüche, dadurch gekennzeichnet, daß das Zink ein Pulver ist, das durch ein 300 B.S. Mesh-Sieb (etwa 50 µm) geht.

5. Lagermaterial nach irgendeinem der vorhergehenden Ansprüche, dadurch gekennzeichnet, daß die Legierung auf Kupferbasis ein Pulver ist, das durch ein 300 B.S. Mesh-Sieb (etwa 50 µm) geht.

6. Lagermaterial nach irgendeinem der vorhergehenden Ansprüche, dadurch gekennzeichnet, daß die Legierung auf Kupferbasis aus der Gruppe der Legierungen gewählt wird, die Messing, Zinn-Bronze und Phosphorbronze umfaßt.

7. Lager, enthaltend eine feste Unterlage und darauf vorliegend eine bleifreie Auskleidung, die eine PTFE-Matrix aufweist, die darin 1 bis 10 Vol.-% Graphit, 5 bis 20 Vol.-% eines Pulvers einer Legierung auf Kupferbasis und 4 bis 25 Vol.-% Zinkpulver einbezogen enthält.

## Revendications

1. Matériau sans plomb pour coussinets qui comprend une matrice de PTFE ayant incorporé 1 à 10% en volume de graphite; 5 à 20% en volume de poudre d'alliage à base de cuivre et 4 à 25 en volume de poudre de zinc.

2. Matériau pour coussinets selon la revendication 1 caractérisé en ce qu'il comprend de 2 à 7% en volume de graphite; 10à 20% d'alliage de cuivre et 5 à 20% en volume de zinc.

3. Matériau pour coussinets selon l'une ou l'autre de la revendication 1 ou la revendication 2, caractérisé en outre en ce qu'il comprend de 3 à 7% en volume de graphite; 13 à 17% en volume d'alliage à base de cuivre et 8 à 12% en volume de zinc.

4. Matériau pour coussinets selon une quelconque des revendications précédentes caractérisé en ce que le zinc est une poudre qui passe à travers un tamis de mailles 300 B.S. (environ 50 µm).

5. Matériau pour coussinets selon une quelconque des revendications précédentes caractérisé en ce que l'alliage à base de cuivre est une poudre qui passe à travers un tamis de mailles 300 B.S. (environ 50 µm).

6. Matériau selon une quelconque des revendications précédentes caractérisé en ce que l'alliage à base de cuivre est sélectionné dans le groupe des alliages comprenant le laiton, le bronze d'étain et le bronze de phosphore.

7. Matériau comprenant un support dur avec la présence sur celui-ci d'un revêtement sans plomb comprenant un matrice de PTFE ayant incorporé 1 à 10% en volume de graphite; 5 à 20% en volume de poudre d'alliage à base de cuivre et 4 à 25% en volume de poudre de zinc.
